# EUROPEAN PATENT APPLICATION

(11) **EP 2 085 970 A1**
(43) Date of publication of application: **05.08.2009**
(21) Application number: 07829888.2
(22) Date of filing: 16.10.2007
(51) Int. Cl.: G11B 20/10, G06F 21/24, H04L 9/14, H04N 5/91, H04N 7/16

(54) **INFORMATION RECORDING DEVICE, INFORMATION REPRODUCING DEVICE, PROGRAM AND RECORDING MEDIUM**

(30) Priority: 16.10.2006 JP 2006281983; 15.10.2007 JP 2007268431
(71) Applicant: Sharp Kabushiki Kaisha, Osaka-shi, Osaka 545-8522 (JP)
(72) Inventor: OKADA, Yoshihiro, Osaka-shi, Osaka 545-8522 (JP); YOSHIDA, Masahiro, Osaka-shi, Osaka 545-8522 (JP); IRIBOSHI, Atsushi, Osaka-shi, Osaka 545-8522 (JP); KIBARA, Shinjiroh, Osaka-shi, Osaka 545-8522 (JP); OIKAWA, Tatsuya, Osaka-shi, Osaka 545-8522 (JP); SHIMIZU, Yukitaka, Osaka-shi, Osaka 545-8522 (JP); MATSUSHITA, Takeshi, Osaka-shi, Osaka 545-8522 (JP)
(74) Representative: Treeby, Philip David William
(86) International application number: PCT/JP2007/070154
(87) International publication number: WO 2008/047786

(57) **Abstract**

In an information recording device (10), a content control unit (14a) divides an input content into a plurality of sections and further subdivides each section into recording units with predetermined data amounts. An attached information generating unit (14b) generates attached information necessary for making use of the input information and license. An encrypting unit (15) generates encrypting information by using a number that is included in the attached information and that is allocated to the input information, and encrypts information included in the recording unit by the encrypted information. Further, the information encrypted by the encrypting unit, the attached information corresponding to the input information and the license are associated with every section divided by the content control unit through an outside input and output I/F(11) and the associated information and the license are recorded on a recording medium. Thus, with the encrypting information simply changed for every short section, encrypting and recording are carried out.

## Description

### Technical Field

The present invention relates to an information recording device, an information reproducing device, a program, and a recording medium. More specifically, the present invention relates to an information recording device for encrypting and recording, in a recording medium, typically video information and audio information, an information reproducing device for reproducing the information recorded in the recording medium, a recording program that is provided in the information recording device, and a recording medium in which the program is recorded.

### Background Art

As high-speed and large-capacity recording media have been developed, it has been widely carried out that video information and audio information are recorded in such recording media as digital data. In most cases, the information is encrypted and recorded so that the information is not improperly used.

Since the video information and the audio information should be transferred at a high speed, a shared key encryption, which is capable of high-speed processing, is often used as an encryption scheme for transferring the information. However, in a case where the whole information is encrypted by use of a single piece of information for encryption, once the information for encryption is revealed, the whole information becomes usable. In order to avoid such a situation, it is preferable that the information be divided into short portions and different pieces of information for encryption be assigned to the short portions, respectively. However, this arises a problem of how to change the pieces of information for encryption respectively assigned to the short portions.

In order to solve the problem, there have been developed various information recording/reproducing apparatuses (for example, see Patent Literature 1). Patent Literature 1 discloses an information recording/reproducing apparatus including: (i) sequential number assigning means for dividing information to be recorded into portions each having a predetermined data amount and assigning sequential numbers, consecutively, to the divided portions each having the predetermined data amount; (ii) encryption control means for setting a base number for key system generation that is to be shared in a given range that is managed by a single license, and for generating an encryption key from a secretly defined function generated based on (a) the base number for key system generation and (b) sequential numbers assigned to the divided portions each having the predetermined data amount in the given range; (iii) storing means for storing the sequential numbers and a headmost logical address in which pieces of data of the divided portions each having the predetermined data amount are stored, as another piece of information, so that the sequential numbers are correlated with the headmost logical address; (iv) encrypting means for carrying out block encryption with respect to the information to be recorded, based on the encryption key generated by the encryption control means, by encrypting the information to be recorded per minimum division unit, which is smaller than the predetermined data amount unit; and (v) recording means for recording signals encrypted by the encryption means in a recording medium, and recording the another piece of information stored in the storing means in the recording medium.

The device disclosed in Patent Literature 1 generates a different encryption key for encrypting the information to be recorded, with respect to each of the divided portions each having the predetermined data amount. This makes it possible to restrain damage to a minimum extent even if any of the encryption keys is revealed.

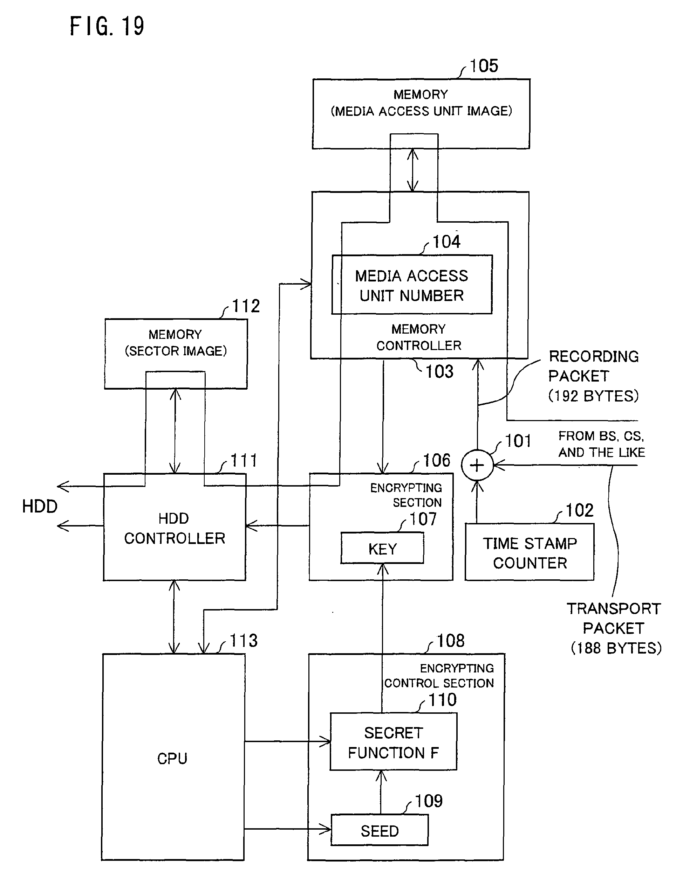

Fig. 19 is a view illustrating a conventional information recording/reproducing apparatus, and is a block diagram of essential parts of the information recording/reproducing apparatus as set forth in Patent Literature 1. In the information recording/reproducing apparatus, a MPEG-2 transport packet having a fixed length of 188 bytes, obtained by receiving a BS digital broadcast, a CS digital broadcast, or the like, is supplied to an adder 101, in which a value of 4 bits corresponding to an arrival time of the transport packet is added to the transport packet as a time stamp. The value is supplied from a time stamp counter 102 synchronized with a system rock of the transport packet. Then, a recording packet of 192 bytes in total is supplied from the adder 101 to a memory controller 103. The memory controller 103 receives the recording packet from the adder 101 as an input, and stores the recording packet in a memory 105.

The memory controller 103 stores recording packets in the memory 105 such that a total of 7 recording packets are located in consecutive 3 sector units. In Patent Literature 1, a unit constituted by 3 sectors is defined as a minimum access unit. Each of the sectors has a logical address starting from 0. The memory controller 103 (i) reads out recording packets of each media access unit, stored in the memory 105, (ii) assigns a media access unit number 104, which is a sequential number, to the each media access unit, (iii) supplies the recording packets of the each media access unit to an encrypting section 106, and (iv) carrying out block encryption, under a control by an encryption control section 108, with respect to each of the recording packets, for example. The media access unit number 104 is not encrypted.

In Patent Literature 1, a key for encrypting/decrypting a content is calculated so as to be correlated with a media access unit number 104 (or a sequential number assigned from a headmost media access unit) assigned to a media access unit so that a key for decrypting a subsequent media access unit can be uniquely found out from a subsequent media access unit number 104 assigned to the subsequent media access unit.

More specifically, in Fig. 19, a central processor (CPU) 113 writes a seed 109, which is a shared base number for key system generation as a base of an encryption key, into the encryption control section 108, and supplies, to the encryption control section 108, a media access unit number identical to a media access unit number 104 to be supplied to the memory controller 103. The encryption control section 108 generates a secretly defined function (a secret function) F110 based on the seed 109 and the media access unit number supplied from the CPU 113, calculates an encryption key (a key) 107 by use of the function, and supplies the key to an encrypting section 106.

The memory controller 103 reads out from the memory 105, per media access unit, data to which the media access unit number 104, which is a sequential number, is assigned. The encrypting section 106 carries out block encryption with respect to the data, for example, per recording packet, based on the encryption key 107. The data encrypted in the encrypting section 106 is once stored in a memory 112 by a HDD controller 111, and then read out and written in a HDD.

The "sector" is a minimum unit to access a hard disk, an optical disk, and the like. An identification number, that is, a logical address is assigned to the sector. In the above example, when the media access unit is recorded, the media access unit number 104 and a logical address of a hard disk are stored such that the media access unit number 104 is correlated with the logical address. More specifically, the CPU 113 correlates the media access unit number 104 with a logical address of a headmost one of the pieces of data, in the media access unit number 104, to be recorded in the HDD, and stores them, as a table, in a memory in the CPU 113.

That is, (a) a logical address of a headmost sector in a plurality of sectors (i.e., units into which a series of record is divided, in the order from its beginning, each unit having a predetermined data amount) to which an identical media access unit number 104 is assigned and (b) the identical media access unit number 104 are stored in the table.

The table is organized and stored in another file as appended information to carry out high-speed reproduction. Then, information that Nth data in the identical media access unit number is recorded in a logical address M of the HDD is recorded in the HDD as another piece of information (file) besides a content (AV data). The seed 109 is recorded, independently to the AV data, in the HDD by the CPU or the like by use of strong encryption means such as a public key, or the like.

In this way, in Patent Literature 1, the encryption key is found out from the media access unit number 104 and the seed 109, thereby making it possible to easily find out sequentially-necessary keys 107 for encrypting a content.

### Citation List

Patent Literature 1
   Japanese Patent Application Publication, Tokukai, No. 2003-115830 A (Publication Date: April 18, 2003)

### Summary of Invention

However, the device disclosed in Patent Literature 1 focuses on (i) recording (a) a content constituted by video information and audio information and (b) appended information necessary for reproduction and (ii) reproducing the content by use of the appended information. For this reason, even in a case of dividing the recorded content, or the like, the appended information, which is attached to the content, cannot be easily divided. In the cases of handling the content such as video information and/or audio information, it is necessary that the appended information for the content be easily edited to carry out editing functions such as dividing a title, deleting a scene, and the like.

Further, the device disclosed in Patent Literature 1 is intended to encrypt and record a content. However, in current digital broadcasts, a broadcasted content contains information related to a copyright. In some cases, it is necessary to control whether the content should be encrypted or not for recording, depending on the information. In a case where a content that is necessary to be encrypted and a content that is not necessary to be encrypted are successively broadcasted, the device disclosed in Patent Literature 1 only can record these contents by encrypting all of these contents. As a result, it is difficult to rightly control and carry out recording with respect to encryption.

The present invention is accomplished in view of the above problems. An object of the present invention is to provide: (a) an information recording device that is capable of, (i) in recording content information including a content and appended information in a recording medium, easily recording the content information by changing information for encryption per short portion, or recording the content partially unencrypted, and (ii) carrying out changes of the content information, such as dividing the content information, or partially deleting the content information; (b) a reproducing device that is capable of immediately reproducing a given part in the content recorded in the recording medium; (c) a recording program that is embedded in the information recording device so as to be executable; and (d) a recording medium in which the program is recorded.

An information recording device of the present invention includes: an information control section for, in order that inputted information is encrypted, (i) dividing the inputted information into a plurality of portions, and further subdividing each of the plurality of portions into recording units each having a predetermined data amount, or alternatively (ii) dividing a whole of the inputted information, as a single portion, into recording units each having the predetermined data amount; an appended information generating section for generating appended information and license(s) for the inputted information, the appended information and the license being necessary for utilizing the inputted information, the appended information including a number assigned to the inputted information; an encrypting section for generating information for encryption by use of the number assigned to the inputted information, and encrypting pieces of information of the recording units of the inputted information by use of the information for encryption so as to generate encrypted information; and an external input-output interface for recording, in a recording medium, the encrypted information that is generated by the encrypting section, the appended information for the inputted information, and the license(s) for the inputted information so that they are correlated with each other for each of the plurality of portions in the inputted information that have been divided by the information control section.

It is preferable that the information recording device of the present invention further include an appended information editing section for generating appended information and a license for each of a plurality of pieces of information, while the encrypted information that is recorded by the external input-output interface is divided into the plurality of pieces of information.

In the information recording device of the present invention, it is preferable that the encrypting section be capable of encrypting only part of continuous information, and the appended information generating section be capable of generating appended information capable of dealing with both encrypted information and unencrypted information which are continuously recorded.

An information reproducing device of the present invention is for decrypting encrypted information that is encrypted by the information recording device and for reproducing the decrypted information, and the information reproducing device includes an external input-output interface for retrieving and reading a corresponding license with respect to a predetermined part of information, and for reading encrypted information from the predetermined part; and a decrypting section for generating information for decryption based on the information for specifying a number that is included in the license, and for decrypting the predetermined part of the information.

An information recording device of the present invention includes: an information control section for dividing inputted information into a plurality of portions, and further subdividing each of the plurality of portions into a plurality of recording units each having a predetermined data amount; license generating means for generating, with respect to each of the plurality of portions, a license for encrypting the plurality of recording units; number assigning means for assigning a number to each of the plurality of recording units constituting a corresponding one of the plurality of portions, in the order from a headmost one of the plurality of recording units in the plurality of the portions, respectively; encrypting means for generating a piece of encrypted information for each of the plurality of recording units in a corresponding one of the plurality of the portions, by encrypting each of the plurality of the recording units by use of a number assigned to said each of the plurality of recording units and a license for a corresponding one of the plurality of portions that includes said each of the plurality of recording units; encrypted information recording means for recording, with respect to each of the plurality of portions, in a recording medium (i) pieces of encrypted information for recording units of said each of the plurality of portions, (ii) a start position of said each of the plurality of portions in the inputted information, and (iii) a license for said plurality of portions; and offset information recording means for recording in the recording medium a start position of a headmost one of the plurality of portions in an encrypted content recorded in the recording medium so that the start position is correlated, as offset information, with the encrypted content, the encrypted content being constituted by all of pieces of encrypted information of the plurality of portions.

The information recording device of the present invention further include dividing means for dividing the encrypted content into a plurality of partial contents each constituted by a plurality of continuous pieces of encrypted information. In the information recording device, the encrypted information recording means records, for each of the plurality of partial contents, a start position contained in the encrypted content of a headmost one of the plurality of continuous pieces of encrypted information so as to be correlated, as a start position of a headmost one of the plurality of portions constituting said each of the plurality of partial contents, with said each of the plurality of partial contents, and the offset information recording means records for each of the plurality of partial contents a position in the encrypted content of a headmost one of the continuous pieces of encrypted information constituting said each of the plurality of partial contents so that the position is correlated, as offset information, with said each of the plurality of partial contents.

An information reproducing device of the present invention is for decrypting pieces of encrypted information that are encrypted by the aforementioned information recording device and for reproducing pieces of the decrypted information, and the information reproducing device includes decrypting means for decrypting the pieces of encrypted information in order from a headmost one of the pieces of encrypted information by use of a license for the headmost one of the pieces of encrypted information, by finding a difference between offset information and the start position of the headmost one so as to specify the headmost one of the pieces of encrypted information in said each of the plurality of partial contents.

The information recording device may be realized by a computer. In this case, a program for causing the computer to function as each of the sections so that the information recording device can be realized by the computer, and a computer-readable recording medium in which the program is stored are also included in the scope of the present invention.

For a fuller understanding of the nature and advantages of the invention, reference should be made to the ensuing detailed description taken in conjunction with the accompanying drawings.

### Brief Description of Drawings

Fig. 1

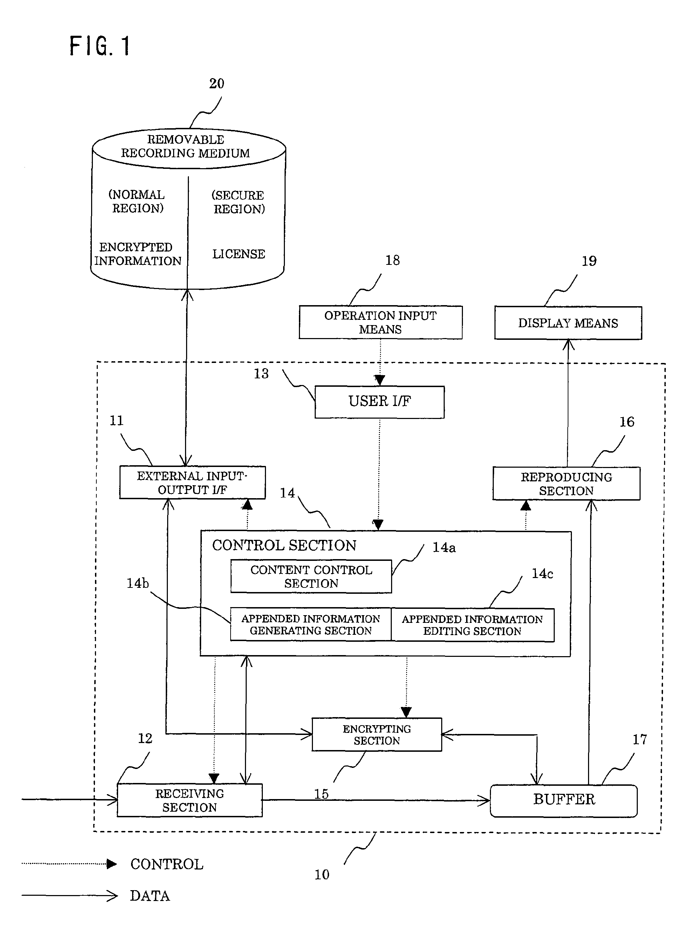

   Fig. 1 is a block diagram illustrating a basic exemplary arrangement of an information recording/reproducing apparatus according to one embodiment of the present invention.
Fig. 2

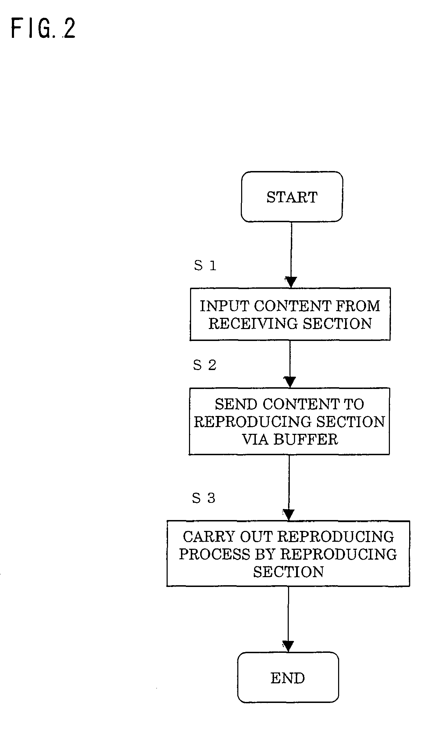

   Fig. 2 is a flow chart illustrating an exemplary process procedure of an information recording/reproducing apparatus according to the first embodiment of the present invention.
Fig. 3

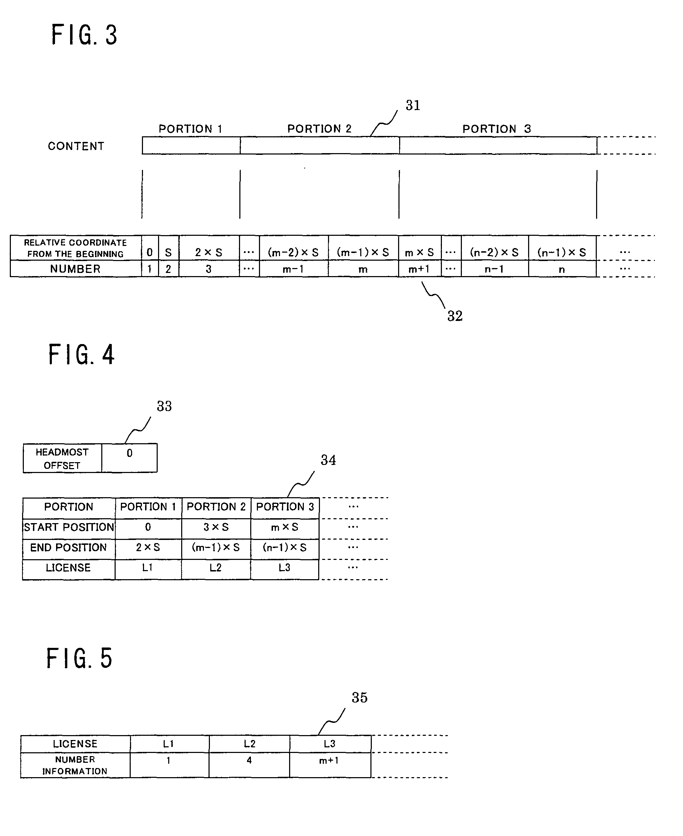

   Fig. 3 schematically illustrates a data structure of an information recording medium of the present invention.
Fig. 4
   Fig. 4 schematically illustrates a data structure of an information recording medium of the present invention.
Fig. 5
   Fig. 5 schematically illustrates a data structure of an information recording medium of the present invention.
Fig. 6

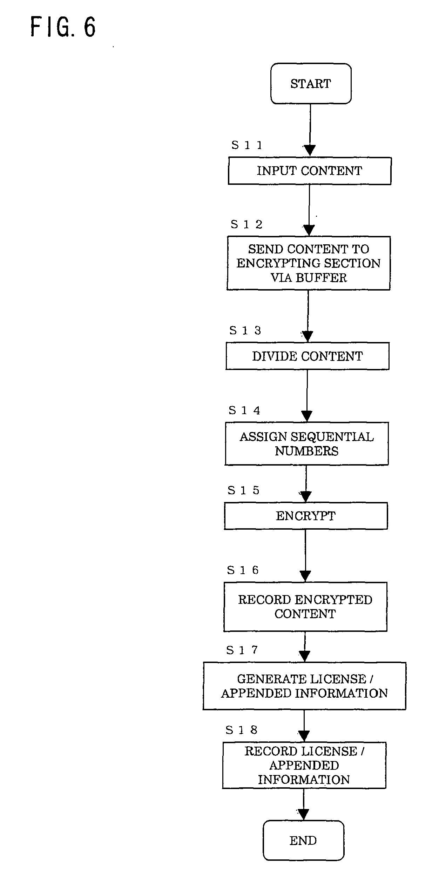

   Fig. 6 is a flow chart illustrating an exemplary process procedure of recording, in an information recording/reproducing apparatus.
Fig. 7

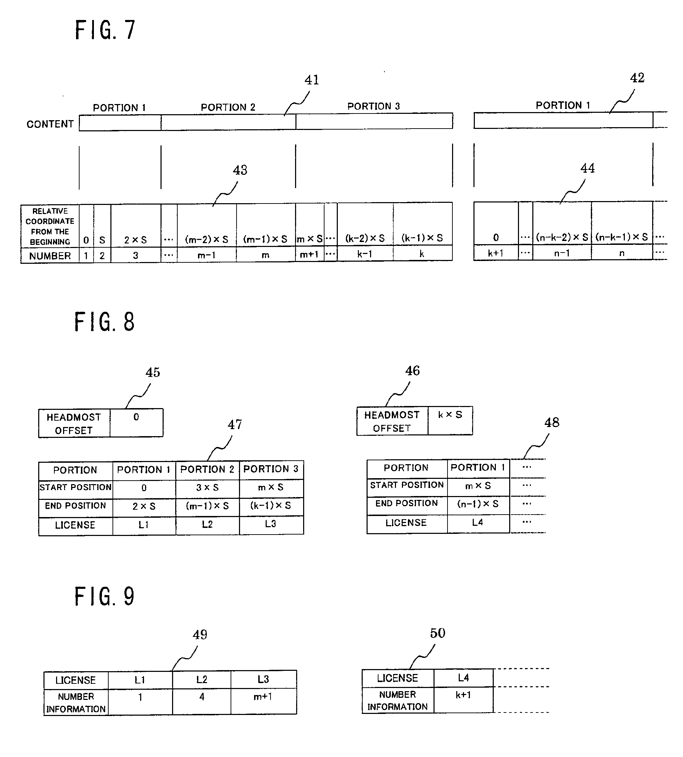

   Fig. 7 schematically illustrates a data structure of an information recording medium of the present invention.
Fig. 8
   Fig. 8 schematically illustrates a data structure of an information recording medium of the present invention.
Fig. 9
   Fig. 9 schematically illustrates a data structure of an information recording medium of the present invention.
Fig. 10

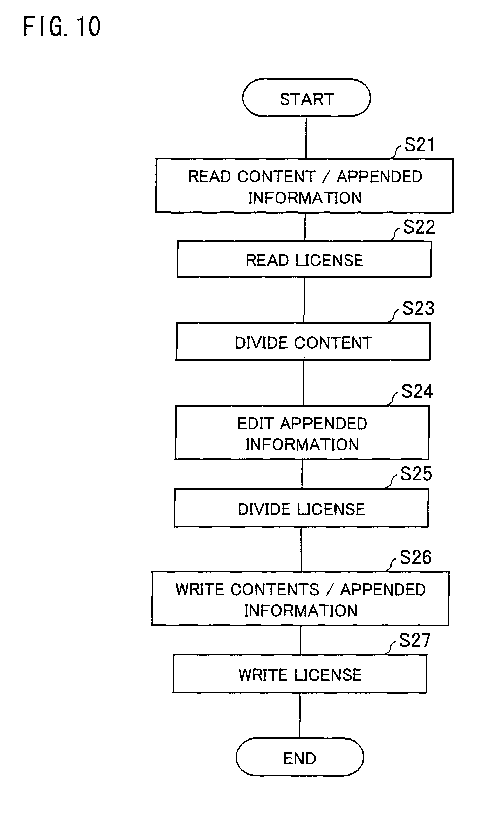

   Fig. 10 is a flow chart illustrating an exemplary process procedure of dividing, in an information recording/reproducing apparatus.
Fig. 11

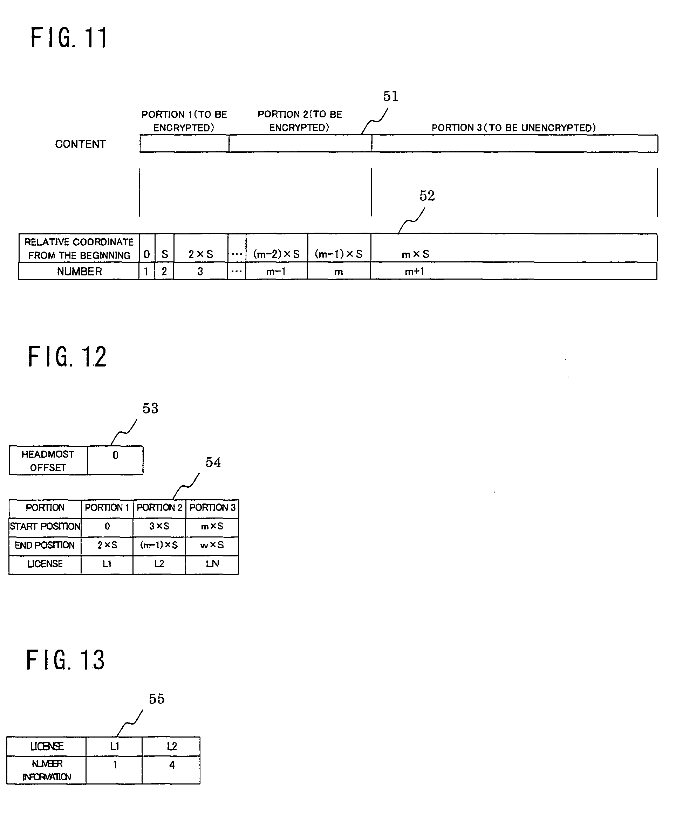

   Fig. 11 schematically illustrates a data structure of an information recording medium of the present invention.
Fig. 12
   Fig. 12 schematically illustrates a data structure of an information recording medium of the present invention.
Fig. 13
   Fig. 13 schematically illustrates a data structure of an information recording medium of the present invention.
Fig. 14

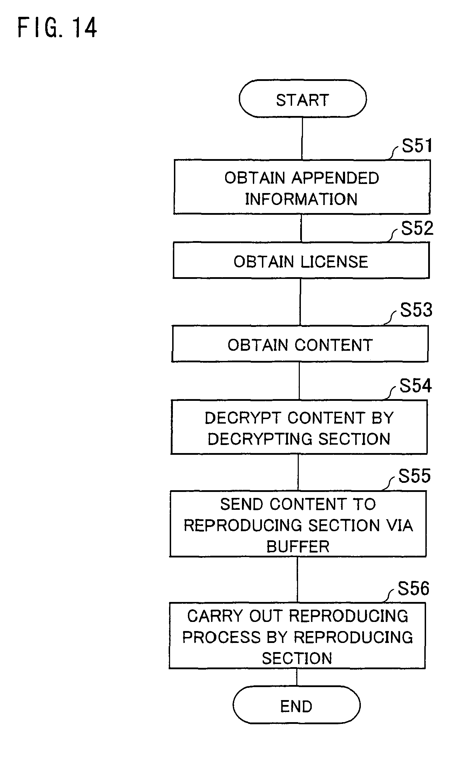

   Fig. 14 is a flow chart illustrating an exemplary process procedure of reproducing, in an information recording/reproducing apparatus.
Fig. 15

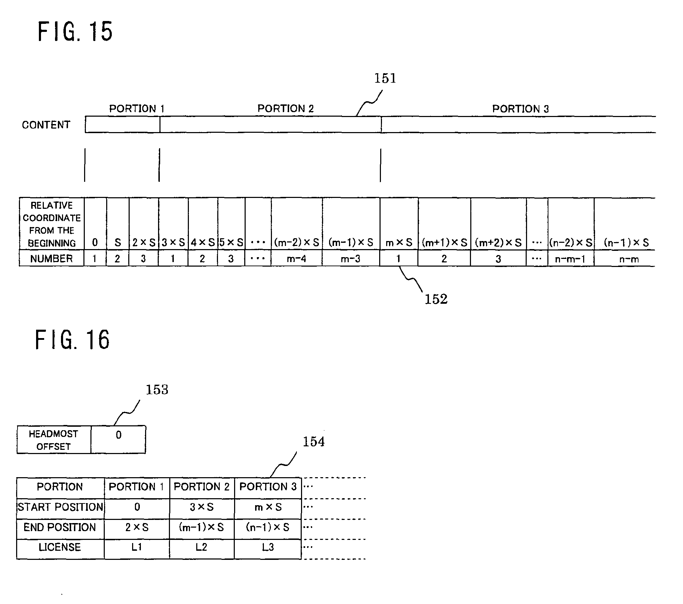

   Fig. 15 illustrates a content divided into a plurality of parts each having a unit for encryption, which content is to be recorded by an information recording/reproducing apparatus.
Fig. 16
   Fig. 16 illustrates appended information.
Fig. 17

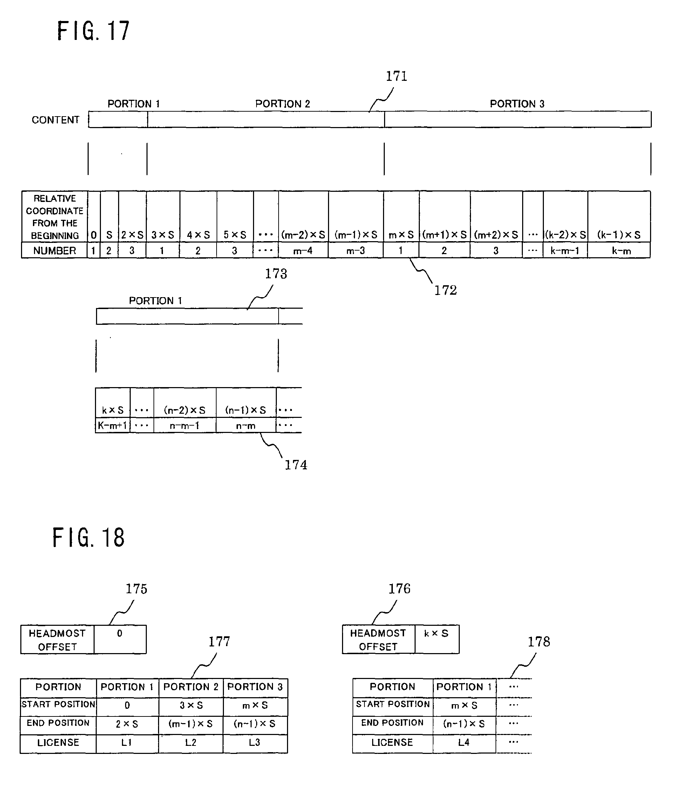

   Fig. 17 illustrates the content of Fig. 15, which is divided into two contents.
Fig. 18
   Fig. 18 illustrates divided pieces of appended information.
Fig. 19
   Fig. 19 illustrates a conventional technique.

### Reference Signs List

10: Information Recording/Reproducing Apparatus
11: External Input-Output I/F
12: Receiving Section
13: User I/F
14: Control Section
15: Encrypting Section
16: Reproducing Section
17: Buffer
18: Operation Input Means
19: Display Means
20: Removable Recording Medium

### Description of Embodiments

The present invention relates to an information recording device for encrypting and recording information in a recording medium, an information reproducing device for reproducing the information (content) recorded in the recording medium, recording and reproducing programs stored in these devices, an information recording/reproducing apparatus including these devices, and a recording medium in which the program is stored. The information recording device and the information reproducing device of the present invention are respectively constituted by sections related to recording and reproducing, each of the sections provided in an information recording/reproducing apparatus explained as below. Therefore, the information recording device and the information reproducing device will not be separately described here as single devices, for convenience of explanation. In addition, the following deals with mainly a removable hard disk as an example of information recording medium, but the information recording medium is not limited to this. Recording media such as a hard disk built in an information recording/reproducing apparatus, a readable and writable DVD, a magnet-optical disk, a nonvolatile semiconductor memory are also usable in the present invention.

Fig. 1 is a block diagram illustrating a basic exemplary arrangement of the information recording/reproducing apparatus of the present invention. In Fig. 1, a reference sign 10 indicates a content information recording/reproducing apparatus, a dotted-line arrow indicates a flow of a control signal, and a full-line arrow indicates a flow of a data signal.

The information recording/reproducing apparatus 10 includes: an external input-output interface (I/F) 11 to which a removable recording medium 20 is removably connected; a receiving section 12 via which a content is inputted; a user I/F 13 via which an operation signal from operation input means 18 is inputted; a control section 14 including a CPU for controlling the information recording/reproducing apparatus 10, a memory, and the like; an encrypting section 15 for generating information for encrypting/decrypting a content, and encrypting/decrypting the content; a reproducing section 16 for reproducing the content; and a buffer 17 for temporarily keeping the content. Further, operation input means 18 and display means 19 are integrated with or externally connected to the information recording/reproducing apparatus 10. The removable recording medium 20 is independently provided in the information recording/reproducing such that the removable recording medium 20 can be attached to and detached from the information recording/reproducing apparatus 10.

The following deals with each of the constituents of the information recording/reproducing apparatus 10 in more detail. The external input-output I/F 11 is an interface via which the information recording/reproducing apparatus 10 is connected to the removable recording medium 20. The external input-output I/F 11 includes a removable mechanism for the removable recording medium 20 and an interface for reading and writing data. The receiving section 12 is means via which a content is inputted, and may be, for example: a tuner for receiving a digital broadcasting signal or an analog broadcasting signal; input means such as an IEEE1394 interface; and input means via which data from a digital camera is inputted.

The user I/F 13 selects operation in the information recording/reproducing apparatus 10, such as selection of a channel of digital broadcasts and operation of recording and reproducing. The control section 14 controls each of the constituent sections based on input from the user I/F 13. The encrypting section 15 generates information for encrypting/decrypting a content, and encrypts/decrypts the content. The reproducing section 16 reproduces the content. The buffer 17 is a buffer in which a received content or a content to be reproduced is temporarily stored. The operation input means 18 is for a user to operate the information recording/reproducing apparatus 10. The display means 19 displays the content reproduced by the reproducing section 16 and an OSD (on screen display) generated by the user I/F 13. The removable recording medium 20 is a recording medium in which an encrypted content and a license necessary for utilizing the content are recorded.

In the exemplary arrangement, an ATA (At Attachment) interface, for example, is used as an interface of the external input-output I/F 11 for reading and writing data with respect to the removable recording medium 20. However, a USB (Universal Serial Bus) and an interface such as IEEE1394 may be also used. Further, in the exemplary arrangement, the receiving section 12 is receiving means for receiving a digital broadcasting signal, but may be means for acquiring a content via a network. The reading and writing data from and in the removal recording medium 20, the receiving section 12 for receiving a digital broadcasting signal, the reproducing section 16 for decoding the content, and the like are not particular to the present invention. These may be the same as those employed, for example, in a digital hi-vision recorder DV-AC32, which is produced by the applicants. Details of the encrypting section 15 will be described later.

The operation input means 18 is, typically, a remote controller, buttons provided in the information recording/reproducing apparatus, and the like. The display means 19 is, for example, a display device such as a liquid crystal display, a plasma display, and an EL display. The removable recording medium 20 is, for example, a removable hard disk.

### First Embodiment

Fig. 2 is a flow chart illustrating an exemplary process procedure of an information recording/reproducing apparatus according to the first embodiment of the present invention. First explained is a process in a normal looking and listening state carried out by the information recording/reproducing apparatus of Fig. 1.

The information recording/reproducing apparatus 10 receives a content via the receiving section 12 (Step S1). A video signal of the content is a TS (transport stream) of a selected digital broadcast, or a PS (program stream) from an external reproducing device. A channel to be selected is preliminarily selected by the operation input means 18 via the user I/F 13, which is not shown in the flow chart of Fig. 2. The controller 14 receives, from the user I/F 13, information on a channel to be selected, and supplies the information to the receiving section 12. The receiving section 12, then, selects the channel in accordance with the information.

Subsequently to Step S1, the information recording/reproducing apparatus 10 temporarily stores the content (video data) inputted via the receiving section 12 in the buffer 17, followed by supplying the content from the buffer 17 to the reproducing section 16 (Step S2). Then, the reproducing section 16 decodes the content and outputs the decoded content to the display means 19 (Step S3).

The following describes a process procedure of recording a content, carried out in the information recording/reproducing apparatus 10 illustrated in Fig. 1. First, a data structure of appended information will be explained with reference to Figs. 3 through 5.

In Fig. 3, in a content control section 14a having a function as an information control section, which section 14a is provided in the control section 14, a content is divided into one portion or a plurality of portions, and the one portion or each of the plurality of portions is further divided into recording units each having a recording unit S (1.5 Mbytes in the present embodiment), i.e., a predetermined data amount. That a content is divided into one portion means that a whole of the information (content) is considered as one portion of such divided portions of the content. Fig. 3 illustrates first three portions in portions of a content 31 that are divided as such, and they are referred to as "portion 1", "portion 2", and "portion 3", respectively, from a headmost one of the portions. Fig. 3 further shows, with respect to the content 31, a list 32 of (a) relative coordinates from the beginning of the information (the content 31), of recording units in the content 31 and (b) numbers assigned to the recording units by an appended information generating section 14b provided in the control section 14.

The portion 1 is the headmost one of the portions in the information, and the relative coordinate starts from "0". The portion 1 includes three recording units, and sequential numbers 1 through 3 are assigned to the three recording units, respectively. The portion 2 follows the portion 1, and the relative coordinate starts from "3xS". The portion 2 includes m-3 (m is an integer of not less than 4) recording units, and sequential numbers 4 through m are assigned to the m-3 recording units, respectively. The portion 3 follows the portion 2, and the relative coordinates starts from "m×S". The portion 3 includes n-m (n is an integer of not less than m+2) recording units, and sequential numbers m+1 through n are assigned to the n-m recording units, respectively.

Fig. 4 shows (i) headmost offset information, and (ii) a list 34 of position-identifying information (a position in the content) and a license (including number information for identifying a number), for each of the portions. In the list 34 of Fig. 4, the position-identifying information and the license are related to each other. The headmost offset information 33 is "0", which will be described later in the following explanation about dividing a title. In the present embodiment, a start position and an end position are denoted by a relative position (byte unit), but are not limited. They may be denoted by a sector unit or a recording unit. In the correspondence list 34 shown in Fig. 4, the portion 1 is such that the start position is "0", the end position is "2xS", and a license for the portion 1 is L1; the portion 2 is such that the start position is "3xS", the end position is "(m-1)×S", and a license for the portion 2 is L2; and the portion 3 is such that the start position is "m×S", the end position is "(n-1)×S", and a license for the portion 3 is L3. The L1/L2/L3 are information for identifying a license, i.e., a license ID. The license ID can be identified by a number or a recording position in the recording medium 20.

Fig. 5 shows a correspondence list 35 of the licenses and the number information included in the licenses that are related to each other. Specifically, in the correspondence list 35 shown in Fig. 5, a headmost one of the sequential numbers in each of the portions is stored as the number information, e.g., "1" is stored with respect to the license L1, "4" is stored with respect to the license L2, and "m+1" is stored with respect to the license L3.

The headmost offset information 33, information of the correspondence list 34 in Fig. 4, and information of the correspondence list 35 in Fig. 5 are recorded as appended information for the content 31 in the removable recording medium 20, as well as the content 31. As shown in Fig. 1, the removable recording medium 20 has a normal region and a secure region. An encrypted content is stored in the normal region while license(s) itself is(are) stored in the secure region, which can be read and written only by an authenticated appliance. The information on correlation between the position-identifying information and the licenses may be stored in the normal region.

Fig. 6 illustrates a flow of recording. First, a content is inputted via the receiving section 12 (Step S11). The process is the same as that of Step S1 described in regard to Fig. 2. The content from the receiving section 12 is temporarily stored in the buffer 17 (Step S12). The content control section 14a provided in the control section 14 divides the content into portions, and then further divides each of the portions of the content into recording units, based on the input of the content from the receiving section 12 and an input from the user I/F 13, in the aforementioned manner (Step S13). As such the content control section 14a divides inputted information into a plurality of portions, and further divides each of the plurality of portions into recording units each having a predetermined data amount. Alternatively, the content control section 14a divides a whole of the inputted information, as a single portion, into recording units each having a predetermined data amount.

Subsequently to Step S13, the appended information generating section 14b provided in the control section 14 assigns a sequential number to each of the recording units (Step S14). The appended information generating section 14b assigns a sequential number to each of the recording units in each of the portions. In the present embodiment, the sequential numbers starts from "1", as an example. Further, in the present embodiment, the sequential numbers are assigned continuously between the portions.

The encrypting section 15 generates a piece of information for encryption based on a number assigned to each of the recording units by the appended information generating section 14b (Step S 15). In Step S 15, the encrypting section 15 also encrypts, by use of the piece of information for encryption, the each of the recording units of the content stored in the buffer 17 that have been divided in Step 13.

Then, the information recording/reproducing apparatus 10 records pieces of encrypted content, as a single content, in the removable recording medium 20 via the external input-output I/F 11 (Step S16). The appended information generating section 14b in the control section 14 generates a license(s)/appended information (Step S17). The license and the appended information are also stored in the removable recording medium 20 (Step S18). As such, the appended information generating section 14b generates a license including number information for identifying an assigned number. Further, the appended information generating section 14b also generates appended information for identifying a position in the inputted information of each of the portions. Finally, the external input-output I/F 11 stores the license(s), the appended information, and the pieces of encrypted content in the removable recording medium 20 so as to be correlated to each other.

The procedure is repeatedly carried out until an end of the content. As such, a content can be recorded by easily changing information for encryption every short part of the content.

### Second Embodiment

Next will be described a process procedure of dividing content information, which is carried out the information recording/reproducing apparatus 10 illustrated in Fig. 1. The present embodiment deals with, as an example, a case where the content recorded in the first embodiment is divided at k×S from a beginning of the content in the portion 3. First, a data structure of appended information will be explained with reference to Figs. 7 through 9.

Fig. 7 illustrates how the content of Fig. 3 is divided. As illustrated in Fig. 7, the content 31 in Fig. 3 is divided, at a given part of the portion 3, into two: a content 41 and a content 42. In Fig. 7, the content 41 includes three portions: "portion 1", "portion 2", and "portion 3", from the beginning, while the content 42 includes the rest of portions, which also starts from "portion 1". Further, Fig. 7 shows a list 43 for the content 41 of: (a) relative coordinates, from the beginning of the information (the content 41), in each of the portions and (b) numbers assigned to the each of the portions by the appended information generating section 14b, so that the list 43 is correlated with the content 41. Meanwhile, Fig. 7 also shows a list 44 for the content 42 of (c) relative coordinates, from the beginning of the information (the content 42), in each of the portion and (d) numbers assigned to the each of the portions by the appended information generating section 14b, so that the list 42 is correlated with the content 42.

In the present embodiment, structures of the portions 1 and 2 in the content 41 are the same as those in the first embodiment. The portion 3 follows the portion 2, and the relative coordinate starts from "m×S". The portion 3 includes k-m (k is an integer of not less than m+2) recording units, and sequential numbers m+1 through k are assigned to the recording units, respectively. The content 42 newly starts from the portion 1, and therefore, the relative coordinate in the portion 1 starts from "0". The portion 1 of the content 42 includes n-k (n is an integer of not less than k+2) recording units, and sequential numbers k+1 through n are assigned to the recording units, respectively. The sequential numbers assigned in the content 42 are the same as those assigned to corresponding parts in the content 31 that has not been divided.

Fig. 8 shows, for the content 41 of Fig. 7, (i) headmost offset information 45 and (ii) a correspondence list 47 of position-identifying information (a position in the content) and a license (including number information for identifying a number), for each of the portions in the content 41. In the correspondence list 47, the position-identifying information and the license are related to each other. Further, Fig. 8 shows, for the content 42 of Fig. 7, (iii) headmost offset information 46 and (iv) a correspondence list 48 of position-identifying information and a license, for each of the portions in the content 42. In the correspondence list 48, the position-identifying information and the license are related to each other. The headmost offset information 45 for the content 41 is "0", as shown in Fig. 8. In the correspondence list 47, the portions 1 and 2 are the same as those in the first embodiment. The portion 3 is such that a start position is "m×S", an end position is "(k-1)×S", and a license for the portion 3 is L3. Meanwhile, the headmost offset information for the content 42 is "k×S". In the correspondence list 47, the portion 1 is such that the start position is "m×S", the end position is "(n-1)×S", and a license for the portion 1 is L4. Since the content 42 is a new content formed by dividing the content 31 shown in Fig. 4, the relative coordinate in the portion 1 starts from "0", as shown in the list 44. In a case where the list 44 is formed based on data of the correspondence list 34 of Fig. 4, it is necessary to change all the relative coordinates of the start positions and the end positions so that the relative coordinate restarts from "0". This requires a lot of processes. In this regard, in order to avoid an increase in the number of processes, a coordinate of a recording unit that is to be a start position of the content 42 is recorded as a headmost offset. This makes it possible to easily form a correspondence list for the content 42 as the correspondence list 48 by copying a corresponding part in the correspondence list 34.

Fig. 9 shows a correspondence list 49, for the content 41 of Fig. 7, of the licenses and the number information included in the licenses, which are related to each other. In addition, Fig. 9 also shows a correspondence list 50, for the content 42 of Fig. 7, of the licenses and the number information included in the licenses, which are related to each other. In the correspondence list 49, licenses L1 and L2 are the same as those in the first embodiment. Number information "m+1" is stored with respect to a license L3, in the correspondence list 49. In the correspondence list 50, number information "k+1" is stored with respect to a license L4.

Fig. 10 illustrates a flow of diving a content. The control section 14 reads a first content and first appended information stored in the removable recording medium 20 via the external input-output I/F 11 (Step S21). The control section 14 also reads licenses for the first content in the similar manner (Step S22). The content control section 14a in the control section 14 divides the first content into second and third contents at a designated position (Step S23). Then, an appended information editing section 14c in the control section 14 divides the first appended information into second and third pieces of appended information as shown in Figs. 8 and 9, and assigns a new license L4 (Step S23). The appended information editing section 14c generates the license L4 and writes number information of the license L4 to the buffer 17 (Step S24). The control section 14 then writes the second and third contents and the second and third pieces of appended information to the removable recording medium 20 (Step S26). Subsequently, the control section 14 writes the licenses to the removable recording medium 20 via the external input-output I/F 11. In this way, when the content control section 14a divides the first content into the second and third contents, the appended information editing section 14c changes the first appended information into the second and third pieces of appended information for the second and third contents, respectively, and generates the new license as such.

With the present embodiment, it is possible to successfully carry out dividing of content information by the aforementioned easy procedure. In the present invention, setting the headmost offset information, as shown in Fig. 10, enables to minimize processes necessary for changing start positions and end positions in the correspondence lists in dividing a title.

### Third Embodiment

The following deals with a process procedure of recording a content without encrypting the content in a case where copyright information in the content being recorded is changed during recording, which recording is carried out by the information recording/ reproducing apparatus 10 illustrated in Fig. 1. First, a data structure will be explained with reference to Figs. 11 through 13.

Fig. 11 illustrates a case where a content, which has a similar structure to that of Fig. 3, is recorded such that the content is recorded unencrypted from a middle of the content. In Fig. 11, a content 51 is recorded such that portions 1 and 2 are encrypted in the similar manner to the first embodiment and subsequent portions are unencrypted. The control section 14 determines which part of the content is to be recorded encrypted and which part of the content is to be recorded unencrypted. The determination of encryption/unencryption is carried out based on copy control information included in the content to be recorded. The copy control information generally includes information on copy-free (copy available), copy-once (once copy available), or the like information. The control section 14 determines and controls, based on the copy control information, which part of the content is to be recorded encrypted and which part of the content is to be recorded unencrypted.

In a part of the content to be encrypted, the content is divided into portions in the similar manner to the list 32 of Fig. 3. Meanwhile, since a rest of the content to be unencrypted is not necessary to be divided, a whole of the rest of the content is dealt with as a portion 3. In a list 52, a number is assigned to the portion 3, but it does not matter whether the number is assigned or not.

Fig. 12 shows (i) headmost offset information and (ii) a list of position-identifying information (a position in the content) and a license (including number information for identifying a number), for each of the portions. In the list, the position-identifying information and the license are related to each other. The headmost offset information 53 is "0". Portions 1 and 2 are the same as those in the first embodiment. According to the list, a portion 3 is such that an end position is "w×S", which is the end of the content, and a license LN is assigned. The "LN" is a special license ID for specifying that the portion is unencrypted content. Such a special ID is set in licenses so that unencrypted content is identified. A license having a license ID "LN" is not actually present.

Fig. 13 is a list of licenses and number information included in the licenses, which are related to each other. In a correspondence list 55 exemplified in Fig. 13, licenses L1 and L2 are the same as those in the first embodiment. Since the license LN is not actually present, the license LN is not listed in the correspondence list 55 in Fig. 13.

A process flow of recording in the third embodiment is the same as the process flow of recording in the first embodiment, shown in Fig. 6. Note, however, that the encryption process of a content of (Step S15) in Fig. 6 is carried out such that a portion to be unencrypted is recorded as it is, without being encrypted.

With the present embodiment, it is possible to continuously record a content by changing recording conditions such that a part of the content is recorded encrypted and another part of the content is recorded unencrypted.

Further, even in a case where a content is partially nonexistent due to deleting of a scene, when a license ID for identifying the deleted scene is set and appended information is generated in the similar process to the above process, it is possible to easily generate appended information for the deleted scene.

### Fourth Embodiment

Fig. 14 shows a flow of reproducing a content as recorded in the first through third embodiments. The present embodiment deals with a reproducing process of a content, carried out by the information recording/reproducing apparatus 10 exemplified in Fig. 1.

The control section 14 obtains appended information stored in the removable recording medium 20 via the external input-output I/F 11 (Step S51). The control section 14 then, by referring to an offset value(s) and a reproduction start positions of each of portions of a content, each stored in the appended information, obtains a license for a part of the content that is to be reproduced (Step S52). The information recording/reproducing apparatus 10 obtains the part of the content to be reproduced, stored in the removable recording medium, via the buffer 17 (Step S53). Subsequently, the encrypting section 15 including a decrypting section generates information for decryption, decrypts the part of the content to be reproduced, and writes a decryption result to the buffer 17 (Step S54). In a case where the appended information indicates that the part of the content to be reproduced is unencrypted, the decryption process is not carried out and the part is written into the buffer 17 as it is. Thus unencrypted part of the content, stored in the buffer 17, is then sent to the reproducing section 16 (Step S55). The reproducing section 16 decodes the part of the content and outputs a video signal to the display means 19 (Step S56).

In the present embodiment, the content is recorded such that the content is divided into portions, the portions are further divided into recording units each having a recording unit, and sequential numbers are assigned to the recording units in each of the portions. This makes it possible to quickly decrypt a given part, thereby allowing random reproduction of the content to be easily carried out. In regard to processes that are not described in the present embodiment, it is possible to carry out the processes in the same manner as those carried out in a digital hi-vision recorder.

### Fifth Embodiment

The present embodiment deals with a dividing process of a content, carried out by the information recording/reproducing apparatus 10 illustrated in Fig. 1 with reference to Figs. 15 through 18.

In the information recording/reproducing apparatus 10, the encrypting section 15 encrypts a content received by the receiving section 12. Thus encrypted content is recorded in the recording medium 20 via the external input-output I/F. At the same time, in the information recording/reproducing apparatus 10, the appended information generating section 14b in the control section 14 generates appended information. The appended information is for use in the decryption process when the encrypted content is reproduced.

Fig. 15 illustrates a content that is divided into a plurality of parts each having a unit for encryption when the content is recorded by the information recording/reproducing apparatus 10.

As illustrated in Fig. 15, a content 151 includes a portion 1, a portion 2, and a portion 3. Each of the portions are recorded, by the content control section 14a, such that the each of the portions is further divided into a plurality of recording units each having a recording unit S. The recording unit "S" represents a predetermined data amount (for example, 1.5 Mbytes). That is, in the content 151, the portion 1 has a data amount of "3xS", the portion 2 has a data amount of "(m-3)xS", and the portion 3 has a data amount of "(n-m)xS".

Moreover, in the content 151, a "number" is assigned to each of the recording units (each having a recording unit S) by the content control section 14a (number assigning means). In the present embodiment, the "number" is sequentially assigned to the each of the recording units in each of the portions, in the order from a headmost recording unit. The "number" starts from "1", that is, a number assigned to the headmost one of the recording units in each of the portions is "1". A list 152 shows (i) a "relative coordinate from the beginning" and (ii) a "number" assigned to a recording unit in each relative coordinate. In the list 152, the relative coordinate and the number are related to each other. The "number" is used for encrypting a content when the content is to be recorded. More specifically, the "number" is used for generating information for encryption (for example, an encryption key), for encrypting the content. For this reason, the number is also necessary for generating information for decryption (for example, a decryption key), for decrypting the encrypted content when the recorded content is to be reproduced.

In the present embodiment, the information recording/reproducing apparatus 10 encrypts the content per portion, that is, each of the portion 1, the portion 2, and the portion 3. In the information recording/reproducing apparatus 10, the appended information generating section 14b (license generating means) generates a different license per unit for encryption, that is, for each of the portions 1 through 3. In other words, the portions 1 through 3 are controlled by different licenses, respectively. The license is also used for generating information for encryption for encrypting the content, as well as the "number". For this reason, the license is also necessary for generating information for decryption for decrypting the encrypted content. The unit for encryption may be a whole of the content, and is not especially limited.

As described above, in the information recording/reproducing apparatus 10, the decryption process in reproducing an encrypted content recorded requires two pieces of information: the license and the "number". In the present embodiment, in a case where a content is recorded encrypted, information on the license is recorded as appended information in the recording medium 20.

Fig. 16 shows appended information. As shown in Fig. 16, the appended information includes (i) a headmost offset 153 and (ii) a list 154 (hereinafter referred to as a correspondence list) of a position and a license for each of portions constituting a content. In the list 154, the position and the license are related to each other. The appended information is generated by the appended information generating section 14b and recorded in the recording medium 20 via the external input-output I/F. Encrypted information recording means in Claims is constituted by the encrypting section 15, the appended information generating section 14b, and the external input-output I/F. Offset information recording means in Claims is constituted by the appended information generating section 14b, the appended information editing section 14c, and the external input-output I/F.

The following explains about the correspondence list 154 in detail. As shown in Fig. 15, in the content 151, relative coordinates for the portion 1 are from "0" to "2xS", relative coordinates for the portion 2 are from "3xS" to "(m-1)×S", and relative coordinates for the portion 3 are from "m×S" to "(n-1)×S". In the correspondence list 154, relative coordinates representing a start position and an end position of each of the portions 1 through 3 are stored. That is, the correspondence list 154 shows a range of each of the portions, that is, a range per unit for encryption. Further, in the correspondence list 154, a license for each of the portions, that is, a license per unit for encryption is stored. Even in a case where only the start positions are stored in the correspondence list 154, it is possible to specify the range of each of the portions, and the end positions are, therefore, not necessarily stored in the list. As such, whether or not the end positions are stored in the list 154 is not especially limited.

The following deals with reproducing of an encrypted content, carried out by the information recording/reproducing apparatus 10. The information recording/reproducing apparatus 10 reproduces the content as follows. That is, an encrypted content stored in the recording medium 20 is read out via the external input-output I/F 11. The encrypting section 15 decrypts the encrypted content. Then, the reproducing section 16 reproduces thus decrypted content. As has been already described, in the case of reproducing such an encrypted content, the information recording/reproducing apparatus 10 carries out the decryption process by use of the license and the "number" assigned per recording unit S. For this reason, in the information recording/reproducing apparatus 10, when the encrypting section 15 carries out the decryption process, the control section 14 reads out appended information stored in the recording medium 20, obtains license information for each of the portions from the correspondence list 154, and supplies thus obtained license information to the encrypting section 15. A headmost offset included in the appended information will be described later. Further, at the same time, the control section 14 supplies, to the encrypting section 15, information indicating the "number" for the content being reproduced. This process will be described more specifically as follows.

In the case where the content is reproduced by the recording/reproducing apparatus 10, the content is read out per recording unit. Data of the list 152 shown in Fig. 15 is not recorded in the recording medium 20. However, by counting the numbers of recording units S thus read out, a "relative coordinate from the beginning" of content being reproduced can be identified. Further, the content control section 14a can obtain license information for the content being reproduced, from the correspondence list 154, based on the identified "relative coordinate from the beginning". In the present embodiment, the "number" assigned to a headmost one of recording units of each of the portions in the content 151 is "1". When the content is to be reproduced, the content control section 14a counts recording units in each of the portions, sequentially from "1", so that each of the "numbers" assigned to each of the recording units can be identified. That is, when the content control section 14a identifies that a portion shifts to a subsequent portion, the content control section 14a recounts the "number" from "1". As such, the content control section 14a can supply, to the encrypting section 15, the "number" and the license for the content being reproduced.

Then, the encrypting section 15 generates information for decryption for decrypting encrypted content, based on the "number" and the license, and carries out the decryption process with respect to the encrypted content by use of thus generated information for decryption.

The following deals with a process of dividing a recorded content into a plurality of contents. The dividing process is carried out, for example, in a case where a plurality of programs are continuously recorded as one content and the recorded content is divided into a plurality of contents respectively for the plurality of programs (titles). The recorded content is divided by the content control section (dividing means) 14a. Fig. 17 shows that the content 151 (encrypted content) of Fig. 15 is divided into a content 171 (partial content) and a content 173 (partial content). The content 151 of Fig. 17 is divided into the contents 171 and 173 of Fig. 17 at a middle of the portion 3 of the content 151. Similarly to Fig. 15, Fig. 17 shows lists 172 and 174 of "relative coordinates from the beginning" and "numbers" for the contents 171 and 173, respectively. In the lists 172 and 174, the relative coordinates and the numbers are related to each other. The lists 172 and 174 are obtained by dividing the list 152 of Fig. 15 into two parts so that the divided two parts are correlated with the contents 171 and 173, respectively. A headmost one of recording units of the content 173 is one at a position of a relative coordinate "k×S" in the content 151. In the content 151, a "number" assigned to that one at the relative coordinate "k×S" is "k-m+1". As has been already described, in the case where a content is recorded encrypted in the information recording/reproducing apparatus 10, the content is encrypted by use of information for encryption, generated based on a license and a "number" for the content. From this reason, in a case where a portion 1 of the content 173 is reproduced, the decryption process with respect to the portion 1 requires: (a) a license for the portion 1 of the content 173 (that is, a license for the portion 3 of the content 151); and (b) a "number" of each of recording units constituting the portion 1 (for example, "k-m+1" for the headmost one of the recording units of the content 173).

Here, explained is dividing of appended information in the case where the content 151 is divided into the contents 171 and 173. In the information recording/reproducing apparatus 10, as has been already described, in the case where a content is recorded, the appended information shown in Fig. 16 is also recorded. In a case where the recorded content is divided and thus divided contents are reproduced, it is necessary that the appended information be also divided and recorded for each of the divided contents.

Fig. 18 shows appended information that is divided when the content 151 is divided. The appended information shown in Fig. 18 includes headmost offsets 175 and 176 and correspondence lists 177 and 178. When the content 151 is divided, the correspondence lists 177 and 178 are generated from the correspondence list 154 by the appended information editing section 14c, and stored in the recording medium 20 via the external input-output I/F. The correspondence list 177 is stored in the recording medium 20 so as to be correlated with the content 171 that is divided from the content 151, while the correspondence list 178 is stored so as to be correlated with the content 173 that is divided from the content 151. It is preferable that the correspondence list 154 be easily divided. In the present embodiment, values in the correspondence list 177 are the same as those in a corresponding part in the correspondence list 154 that has not been divided. Values for a portion 1 in the correspondence list 178 are the same as those for the portion 3 in the correspondence list 154 that has not been divided. A license is newly assigned.

The following deals with a conventional information recording/reproducing apparatus. The conventional information recording/reproducing apparatus is arranged such that the headmost offset 153 is not stored, and just the correspondence list 154 is stored. In the case where the content is divided, the correspondence list 154 is also divided into the correspondence lists 177 and 178, and the correspondence lists 177 and 178 are stored. However, the headmost offsets 175 and 178 are not stored. In the conventional information recording/reproducing apparatus, in a case where the content 173 is reproduced, a license for each of the portions and a "number" for each of recording units of the each of the portions of the content 173 are necessary. A license for the portion 1 can be read out from the correspondence list 178. However, a "number" for a headmost one of the recording units of the content 173 is not "1" and in addition, the "number" is not included in the correspondence list 178. As a result, encrypted content of the content 173 cannot be decrypted. That is, with the arrangement of the conventional information recording/reproducing apparatus, in a case where a content is divided, a "number" assigned to each of recording units in each of the divided contents cannot be identified, thereby resulting in that the each of the divided contents cannot be decrypted and reproduced.

In contrast, in the information recording/reproducing apparatus 10 of the present invention, since a headmost offset is stored, it is possible to identify a "number" assigned to each of recording units in each of the divided contents. The following deals with the headmost offset in more detail.

In the present embodiment, as shown in Fig. 18, the appended information includes the headmost offsets 175 and 176. The headmost offset 175 is stored in the recording medium 20 so as to be related to the content 171 that is divided from the content 151, while the headmost offset 176 is stored in the recording medium 20 so as to be related to the content 173 that is divided from the content 151. In the headmost offset 176, a "relative coordinate from the beginning" of a position at which the content 151 is divided is stored. In other words, a "relative coordinate from the beginning" of a headmost position of the content 171 divided from the content 151, i.e., "k×S" is stored in the headmost offset 176. The headmost offset 176 is recorded in the recording medium 20 by the appended information editing section 14c when the content 151 is divided into the contents 171 and 173.

In a case where the content 173 divided from the content 151 is reproduced, a license for each of the portions and a "number" for each of recording units in the each of the portions are necessary. When the content 173 is to be reproduced, the content control section 14a reads out the correspondence list 178 and the headmost offset 176, and supplies them to the encrypting section 15. Further, the content control section 14a obtains a license "L4" for the portion 1 in the content 173 from the correspondence list 178, and supplies it to the encrypting section 15. The encrypting section 15 finds out, from the headmost offset 176, a "number" assigned to a headmost one of the recording units in the portion 1 of the content 173.

As has been already described, values for the portion 1 in the correspondence list 178 are the same as those for the portion 3 in the correspondence list 154 that has not been divided. That is, a start position of the portion 1 in the correspondence list 178 is "m×S", which is a start position of the portion 3 in the content 151 that has not been divided. On the other hand, the headmost offset 176 is "k×S", which is a "relative coordinate from the beginning" of a dividing position at which the content 151 is divided. Accordingly, a "number" assigned to the headmost one of the recording units in the portion 1 of the content 173 is calculated as "k-m+1". More specifically, the encrypting section 15 divides "k×S" and "m×S", independently, by a recording unit S, so as to obtain: (i) "m", which is the number of recording units in a range from the beginning of the content 151 to the start position of the portion 3 in the content 151; and (ii) "k", which is the number of recording units in a range from the beginning of the content 151 to the dividing position at which the content 151 is divided. Herewith, the "number" assigned to the headmost one of the recording units in the portion 1 of the content 173 can be calculated based of a difference between "m" and "k". The correspondence list may be arranged such that relative coordinates for the start and end positions are divided by the recording unit S, and obtained values are stored as the start and end positions. The arrangement of the correspondence list is not especially limited.

In this way, the information recording/reproducing apparatus 10 of the present invention can identify the license for each of the portions and the "number" assigned to the each of the recording units in the each of the divided contents. As a result, even if an encrypted content is divided into a plurality of encrypted contents, the encrypting section 15 can decrypt each of the plurality of encrypted contents, and the reproducing section 16 can reproduce each of the plurality of contents thus decrypted.

In a case where (i) the content is divided as such and (ii) a "number" assigned to a recording unit at a dividing position of the content, that is, a "number" assigned to a headmost one of recording units in a corresponding one of the divided contents can be identified, the "number" may be stored as an offset. Specifically, in the exemplary arrangement shown in Fig. 17, "k-m+1", which is the "number" assigned to the headmost one of the recording units in the content 173, may be stored as an offset. In this case, the start position of the content 173 divided from the content 151 should be a relative position at which the content 151 is divided as such. That is, "k×S" is set as the start position of the portion 1 in the correspondence list 178.

### Other Embodiment

In the information recording/reproducing apparatus or the information recording device/ the information reproducing device according to the first through fourth embodiments, the present invention is not described with concrete embodiments of each of the constituents. The control section 14 of Fig. 1 may be partially or wholly structured as hardware, or may be constituted by software (firmware embedded in the information recording/reproducing apparatus), a computing apparatus for executing the software, and the like member. The encrypting section 15 may be constituted by software, but is preferably structured as hardware in view of a process speed.

For this reason, the present invention can be a program embedded so as to be executable in a content information recording/reproducing apparatus or a content information recording device/ a content information reproducing device, each including a computing device. Here, briefly explained is an arrangement of a content information recording/reproducing apparatus 10 for executing the program.

In the content information recording/reproducing apparatus 10, assume that an external input-output I/F is an external input-output step, a control section 14 is a control step, a content control section 14a functioning as an information control section is a information control step, an appended information generating section 14b is an appended information generating step, an appended information editing section 14c is an appended information generating step, and a reproducing section 16 is a reproducing step. The program realizes each of the functions at each of the steps, thereby realizing the content information recording/reproducing apparatus or the content information recording device/the content information reproducing device.

The present invention can be a recording medium in which the program is stored.

In Description of Embodiments described are processes for content constituted by video information and audio information, for convenience sake. However, the present invention is applicable to any information realized in the first through fourth embodiments.

The present invention is not limited to the description of the embodiments above, but may be altered by a skilled person within the scope of the claims. An embodiment based on a proper combination of technical means disclosed in different embodiments is encompassed in the technical scope of the present invention.

Each block, especially the control section 14 of the information recording/reproducing apparatus 10 may be realized by way of hardware or software as executed by a CPU.

That is, the information recording/reproducing apparatus 10 includes a CPU (central processing unit) and memory devices (memory media), and the like. The CPU executes instructions of control programs for realizing the functions. The memory devices include a ROM (read only memory) that contains programs, a RAM into which the program are loaded, and a memory containing the programs and various data. The object of the present invention is also attainable by mounting, to the information recording/reproducing apparatus 10, a computer-readable recording medium in which a control program code (executable program, intermediate code program, or source program) for the information recording/reproducing apparatus 10, which is software realizing the aforementioned functions, in order for a computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The information recording/reproducing apparatus 10 may be arranged to be connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. A transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (Registered Trademark), 802.11 wireless, HDR, mobile telephone network, satellite line, or terrestrial digital network. The present invention encompasses a carrier wave or data signal transmission in which the program code is embodied electronically.

An information recording device of the present invention includes: an information control section for, in order that inputted information is encrypted, (i) dividing the inputted information into a plurality of portions, and further subdividing each of the plurality of portions into recording units each having a predetermined data amount, or alternatively (ii) dividing a whole of the inputted information, as a single portion, into recording units each having the predetermined data amount; an appended information generating section for generating appended information and license(s) for the inputted information, the appended information and the license being necessary for utilizing the inputted information, the appended information including a number assigned to the inputted information; an encrypting section for generating information for encryption by use of the number assigned to the inputted information, and for encrypting pieces of information of the recording units of the inputted information by use of the information for encryption so as to generate encrypted information; and an external input-output interface for recording, in a recording medium, the encrypted information that is generated by the encrypting section, the appended information for the inputted information, and the license(s) for the inputted information so that they are correlated with each other for each of the plurality of portions in the inputted information that have been divided by the information control section.

An information reproducing device of the present invention is for decrypting encrypted information that is encrypted by the information recording device and for reproducing the decrypted information. The information reproducing device includes: an external input-output interface for retrieving and reading a corresponding license with respect to a predetermined part of information, and for reading encrypted information from the predetermined part; and a decrypting section for generating information for decryption based on information for specifying a number included in the license, and for decrypting the predetermined part of the information.

An information recording device of the present invention includes: an information control section for dividing inputted information into a plurality of portions, and for further subdividing each of the plurality of portions into a plurality of recording units each having a predetermined data amount; license generating means for generating, with respect to each of the plurality of portions, a license for encrypting the plurality of recording units; number assigning means for assigning a number to each of the plurality of recording units constituting a corresponding one of the plurality of portions, in the order from a headmost one of the plurality of recording units in the plurality of portions, respectively; encrypting means for generating a piece of encrypted information for each of the plurality of recording units in a corresponding one of the plurality of portions, by encrypting each of the plurality of recording units by use of a number assigned to said each of the plurality of recording units and a license for a corresponding one of the plurality of portions that includes said each of the plurality of recording units; encrypted information recording means for recording, with respect to each of the plurality of portions, in a recording medium (i) pieces of encrypted information for recording units of said each of the plurality of portions, (ii) a start position of said each of the plurality of portions in the inputted information, and (iii) a license for said each of the plurality of portions; and offset information recording means for recording in the recording medium a start position of a headmost one of the plurality of portions in an encrypted content recorded in the recording medium so that the start position is correlated, as offset information, with the encrypted content, the encrypted content being constituted by all of pieces of encrypted information of the plurality of portions.

An information reproducing device of the present invention is for decrypting pieces of encrypted information that are encrypted by the information recording device and for reproducing pieces of the decrypted information. The information reproducing device includes: decrypting means for decrypting the pieces of encrypted information in the order from a headmost one of the pieces of encrypted information by use of a license for the headmost one of the pieces of encrypted information, by finding a difference between offset information and the start position of the headmost one so as to specify the headmost one of the pieces of encrypted information in said each of the plurality of partial contents.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### Industrial Applicability

The invention is applicable to an information recording/reproducing apparatus for encrypting/decrypting content constituted by video information, audio information, and the like. Especially, the present invention is preferably applicable to an information recording/reproducing apparatus having editing functions such as dividing of an encrypted content.

## Claims

1. An information recording device comprising:
an information control section for, in order that inputted information is encrypted, (i) dividing the inputted information into a plurality of portions, and further subdividing each of the plurality of portions into recording units each having a predetermined data amount, or alternatively (ii) dividing a whole of the inputted information, as a single portion, into recording units each having the predetermined data amount;
an appended information generating section for generating appended information and license(s) for the inputted information, the appended information and the license being necessary for utilizing the inputted information, the appended information including a number assigned to the inputted information;
an encrypting section for generating information for encryption by use of the number assigned to the inputted information, and for encrypting pieces of information of the recording units of the inputted information by use of the information for encryption so as to generate encrypted information; and
an external input-output interface for recording, in a recording medium, the encrypted information that is generated by the encrypting section, the appended information for the inputted information, and the license(s) for the inputted information so that they are correlated with each other for each of the plurality of portions in the inputted information that have been divided by the information control section.

2. The information recording device as set forth in claim 1, further comprising:
an appended information editing section for generating appended information and a license for each of a plurality of pieces of information, while the encrypted information that is recorded by the external input-output interface is divided into the plurality of pieces of information.

3. The information recording device as set forth in claim 1, wherein:
the encrypting section is capable of encrypting only part of continuous information, and
the appended information generating section is capable of generating appended information capable of dealing with both encrypted information and unencrypted information which are continuously recorded.

4. An information reproducing device for decrypting encrypted information that is encrypted by an information recording device as set forth in any one of claims 1 through 3, and for reproducing the decrypted information, said information reproducing device comprising:
an external input-output interface for retrieving and reading a corresponding license with respect to a predetermined part of information, and for reading encrypted information from the predetermined part; and
a decrypting section for generating information for decryption based on information for specifying a number included in the license, and for decrypting the predetermined part of the information.

5. An information recording device comprising:
an information control section for dividing inputted information into a plurality of portions, and for further subdividing each of the plurality of portions into a plurality of recording units each having a predetermined data amount;
license generating means for generating, with respect to each of the plurality of portions, a license for encrypting the plurality of recording units;
number assigning means for assigning a number to each of the plurality of recording units constituting a corresponding one of the plurality of portions, in the order from a headmost one of the plurality of recording units in the plurality of portions, respectively;
encrypting means for generating a piece of encrypted information for each of the plurality of recording units in a corresponding one of the plurality of portions, by encrypting, with respect to each of the plurality of recording units, the recording unit by use of a number assigned to said each of the plurality of recording units and a license for a corresponding one of the plurality of portions that includes said each of the plurality of recording units;
encrypted information recording means for recording, with respect to each of the plurality of portions, in a recording medium (i) pieces of encrypted information for recording units of said each of the plurality of portions, (ii) a start position of said each of the plurality of portions in the inputted information, and (iii) a license for said each of the plurality of portions; and
offset information recording means for recording in the recording medium a start position of a headmost one of the plurality of portions in an encrypted content recorded in the recording medium so that the start position is correlated, as offset information, with the encrypted content, the encrypted content being constituted by all of pieces of encrypted information of the plurality of portions.

6. The information recording device as set forth in claim 5, further comprising:
dividing means for dividing the encrypted content recorded into a plurality of partial contents each constituted by a plurality of continuous pieces of encrypted information,
the encrypted information recording means recording for each of the plurality of partial contents a start position contained in the encrypted content of a headmost one of the plurality of continuous pieces of encrypted information so as to be correlated, as a start position of a headmost one of the plurality of portions constituting said each of the plurality of partial contents, with said each of the plurality of partial contents, and
the offset information recording means recording for each of the plurality of partial contents a position in the encrypted content of a headmost one of the continuous pieces of encrypted information constituting said each of the plurality of partial contents so that the position is correlated, as offset information, with said each of the plurality of partial contents.

7. An information reproducing device for decrypting pieces of encrypted information that are encrypted by an information recording device as set forth in claim 5 or 6, and for reproducing pieces of the decrypted information, said information reproducing device comprising:
decrypting means for decrypting the pieces of encrypted information in the order from a headmost one of the pieces of encrypted information by use of a license for the headmost one of the pieces of encrypted information, by finding a difference between offset information and the start position of the headmost one so as to specify the headmost one of the pieces of encrypted information in said each of the plurality of partial contents.

8. A program for causing an information recording device to operate which device includes hardware and a computing device, said program being capable of executing the following steps:
(a) the information controlling step of, in order that inputted information is encrypted, (i) dividing the inputted information into a plurality of portions, and further subdividing each of the plurality of portions into recording units each having a predetermined data amount, or alternatively (ii) dividing a whole of the inputted information, as a single portion, into recording units each having the predetermined data amount;
(b) the appended information generating step of generating appended information and license(s) for the inputted information, the appended information and the license being necessary for utilizing the inputted information, the appended information including a number assigned to the inputted information;
(c) the encrypting step of generating information for encryption by use of the number assigned to the inputted information, and of encrypting pieces of information of the recording units of the inputted information by use of the information for encryption so as to generate encrypted information; and
(d) the external input-output step of recording, in a recording medium, the encrypted information that is generated in the encrypting step, the appended information for the inputted information, and the license(s) for the inputted information, so that they are correlated with each other for each of the plurality of portions in the inputted information that have been divided in the information controlling step.

9. A computer-readable recording medium in which a program as set forth in claim 8 is stored.
